# EUROPEAN PATENT APPLICATION

(11) **EP 2 680 494 A1**
(43) Date of publication of application: **01.01.2014**
(21) Application number: 12305774.7
(22) Date of filing: 29.06.2012
(51) Int. Cl.: H04L 12/28, H04N 21/442

(54) **Home network trouble shooting**

(71) Applicant: Alcatel Lucent, 75007 Paris (FR)
(72) Inventor: Gacanin, Haris, 2600 Antwerpen (BE); Drooghaag, Benoit, 1421 Ophain-Bois-Seigneur-Isaac (BE)
(74) Representative: ALU Antw Patent Attorneys

(57) **Abstract**

A home network troubleshooting method and related trouble shooting device to detect impaired home network segments, wherein the home network has a plurality of network devices comprising a residential gateway. The method comprises the steps of:
- collecting by an collector home network parameters for different network devices; and
- cross-correlating by a cross-correlator the network parameters for the different network devices; and
- based upon the cross-correlation, identifying by the cross-correlator anyone of different transients and different events for different devices in the collected network parameters, said differences hereby identifying such impaired home network segment; and
- generating by a generator a repair recommendation based upon the identified differences.

## Description

The present invention relates to a home network trouble shooting method and to a trouble shooting device provided for executing the method.

### BACKGROUND ART

Residential internet connectivity traditionally consists of a single voiceband modem, a Digital Subscriber Line (DSL) with a DSL modem, or a coax-cable modem, and a connection to a computer in the house.

With the arrival of new applications and technologies, such as digital television, on-line gaming and home automation, the Internet access extends to various types of home devices, such as a set-top box, a game console, a home automation system, plural desktops or laptops, etc. These home devices are interconnected by means of a home network, which needs to be administrated and configured. A home network typically accesses the Internet via a home network gateway or residential gateway, which is connected to an access network via a traditional DSL modem or coax-cable modem.

The interconnectivity between two devices in the home network is typically based on already existing in-house media such as twisted pair phone wires, electrical power wires and/or coax-cables. Also, wireless technologies like WiFi are used in a home network.

The in-house available media might suffer from a low quality physical layer offering poor immunity for interference in-house. Impaired network segments may be present due to composite noise or channel impairment. Indeed, on top of diagnostic of devices it is currently not possible to identify network segments which are affected by interference.

Such composite noise might be the consequence of multipath interference, additive/colored noise and possible crosstalk between transmissions belonging to different network systems. In this way, the communication links between two in-house devices may be impacted to such an extent that the usable bandwidth between the two nodes is drastically reduced, such that the intended service cannot be provided.

If a communication problem occurs between two different home networking devices, it is left for the end user to diagnose the problem and to solve it usually without any assistance. A few advices may be given via the operator's helpdesk, but the responsibility of the operator is usually limited to the access network only, and any problem occurring in a home network area is responsibility of the end user. Indeed, currently, only manual troubleshooting, by operator's technicians or the customers themselves, is possible if a failure happens within the home network. Manual troubleshooting is a reaction to the customer complains which triggers the dispatch of technicians to investigate the problem. This procedure is very time consuming and highly costly.

### DESCRIPTION

An object of the present invention is to provide a proactive automatic troubleshooting method i.e. to enable troubleshooting and identification of impaired network segment and provide pro-active repair advices before the customer calls the operator's helpdesk to complain. The aim is to propose a new troubleshooting method for home networks based on network parameter transient analysis and to detect thereby impaired network segments.

According to the invention, this object is achieved due to the fact that a home network troubleshooting method and troubleshooting device is provided to detect impaired home network segments. The home network has a plurality of network devices comprising a residential gateway. The method comprises the steps of:
- collecting by a collector i.e. a collecting means, home network parameters for different network devices; and
- cross-correlating by means of a cross-correlator, coupled to the collector, the network parameters for the different network devices; and
- based upon the cross-correlation, identifying by the cross-correlator anyone of different transients and different events for different devices in the collected network parameters, the anyone of different transients and different events, shortly called differences, identifying such impaired home network segment; and
- generating by a generator, coupled to the cross-correlator, a repair recommendation based upon the identified differences.

It has to be noted that the step of collecting the network parameters for the different network devices is also described in the European *patent application* with short title "Home Network *Identification* Method And Device", *application* number 12290102.8 and filing date 27 Mar 2012.

This application describes a similar step of collecting home network parameters for the network devices in order to recover a home network topology out of the data reported by the home network devices.

According to the present application it is important for the following steps in this home network troubleshooting method, that similar network parameters for different devices are collected.

Indeed, according to the following step of cross-correlating the network parameters for the different network devices, similar parameters for different devices are cross-correlated i.e. compared with each other.

In this way, based upon the results of the cross-correlating, anyone of different transients and different events for different devices are identified. An example of this cross-correlation and identification of the network performance metric is e.g. identifying different transients between good and bad states of the metrics. Different events or different transients, for a same kind of collected parameters or collected metrics for different devices, are identified in these network parameters. Since these differences are an indication of impaired home network segments and are used for the generation of a repair recommendation.

The unique benefit of the application is the fact that automatic troubleshooting by the service provider is possible to detect impaired network segments in the customer in-house network. In this way the manual troubleshooting and intervention by the operator technicians at the customer residence is avoided, by providing accurate repair advices towards the end customer such as this end-customer can apply them himself.

It has to be remarked that in the event when no fault has been detected using the method of the present application, but the customer still complains about service quality or stability, the operator can deduce that the fault is at another level e.g. in the access network itself.

The actual method and device prevents a manual troubleshooting and failure identification by the operator technician at the customer premises which does not involve any human intervention. It helps service providers to reduce their operational costs, response time and number of customer complaints at help desk. The present method also increases the global satisfaction of the end-customer with respect to the quality of service.

In a preferred embodiment of the trouble shooting method the collected network parameters are anyone of binary data signals or real-value data signals.

In a further preferred embodiment the network parameters are anyone of device identifications, domain topology identifications, neighbor device identifications, neighboring network identifications, data rate profiles, device presence indications, measured bit error rates, Cyclic Redundancy Checks, retransmission counters, measured signal to noise ratio's, channel gains, noise levels. It has to be explained that the above list is a non-exhaustive list. As an example for a collection of e.g. device identifications, which is a binary data signal collection, the MAC addresses of the different devices in the network can be collected. Another example is provided e.g. by the measurement of the noise effect at different time instances which is produced by the presence of home network devices i.e. the Signal To Noise Ratio is determined in function of the time for the different devices and this result of this measurement is collected by the collector. Such collection is a collection of real-value data signals. Another example of collection of real-data signals is the collection of the measured bit rate at different predetermined time instances for the different home network devices.

In yet another embodiment the collection of the network parameters is realized by means of predefined classes of a predefined remote management protocol such as e.g. an iteration of a TR-069 protocol.

In another embodiment the method steps are executed by a trouble shooting device in a remote management center, whereby the home network parameters are collected, via the residential gateway, from the different network devices.

According to a suitable embodiment, the trouble shooting device is located in a remote management center which is remote from the home network.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein
Figure 1 Schematically depicts a home network topology in an operator's network and the different functional blocks of the present trouble shooting device; and
Figure 2_Upper part shows measured signal noise ratio as a function of time collection for one home network device;

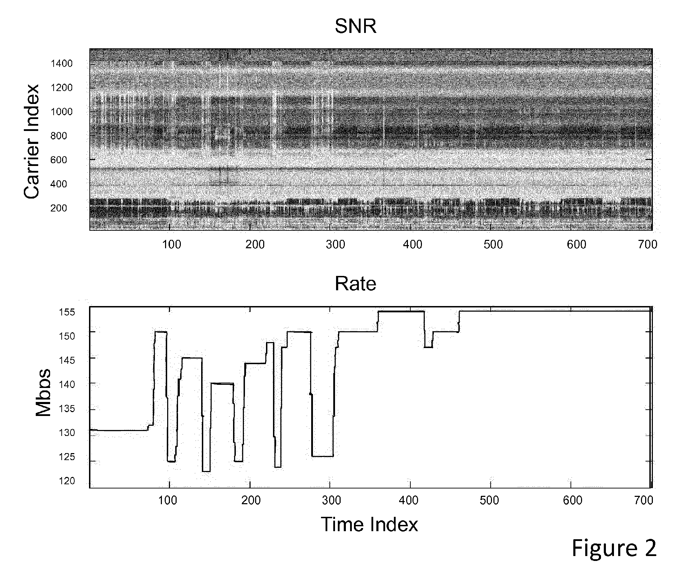

Figure 2_Lower part shows bit rates as a function of time collection for one home network device;

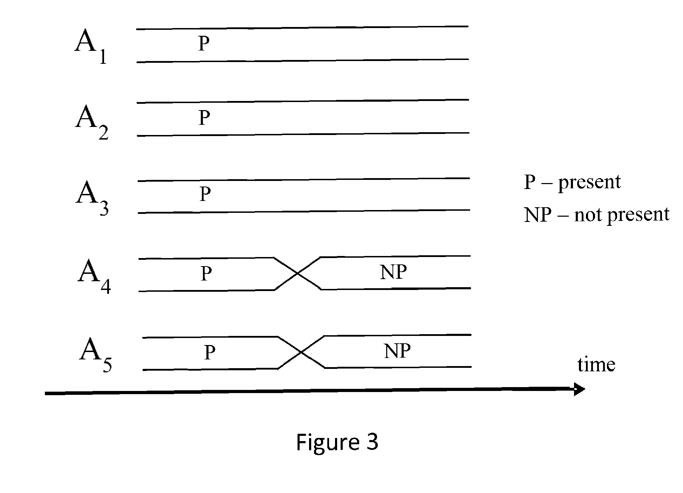

Figure 3 Chronogram illustration of the present method for binary data signals for different home network devices;

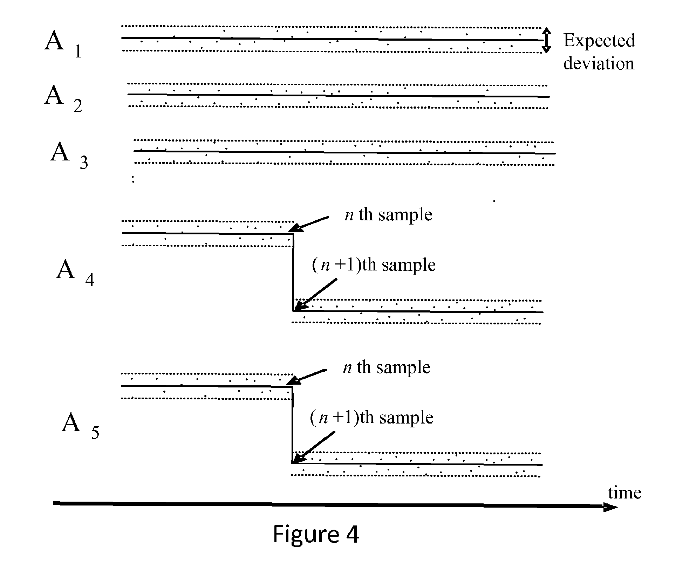

Figure 4 Chronogram illustration of the present method for real-value data signals for different home network devices.

### DETAILED DESCRIPTION

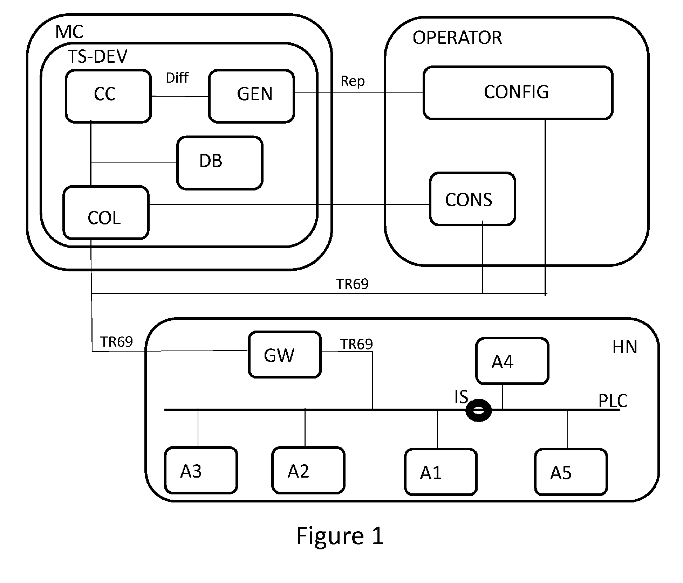

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the home network troubleshooting method will be described in further detail.

Referring to Figure 1 the home network HN comprises a gateway being coupled to the internet network and the internal home network devices A1, A2, A3, A4, A5. According to this preferred embodiment a Power Line Communication network is shown in the home network. Each one of the home network devices is coupled to the Power Line Cable PLC via its associated respective Power Line Modem (not shown). As a matter of example, the network device A2 is implemented by a Set top Box, the network devices A1, A4 and A5 are implemented each by a Personal Computer and the network device A3 is implemented by a Hard Drive. Furthermore, we presume an impaired network segment at IS. As recited above, it has to be understood that a home network is not limited to a Power Line network but might comprise as well twisted pair phone wires; coax cables and/or wireless technologies WiFi. The principle method of the present application can be applied as well in such kind of extended and complex home networks.

The residential gateway GW is further coupled to a collector COL in a Remote Management Center MC. The Remote Management Center further comprises a cross-correlator CC being coupled to the collector COL, a generator GEN being coupled to the cross-correlator CC and a database DB being coupled to the cross-correlator CC and the collector COL.

The Remote Management Center is further coupled to an operator's network which comprises a configurator CONFIG and, coupled thereto, a user console CONS. The configurator CONFIG is further coupled to the generator GEN and to the home network HN and the user console is further coupled to the collector COL and the home network HN.

This proactive method enables efficient troubleshooting of home networks in poor condition and initiates maintenance by providing repair advices before the customer calls the help desk to complain.

At start up of the home network HN and of each additional network device the configurator CONFIG in the Operator's network configures the different network devices in the home network. This can be enabled and performed by means of a remote configuration protocol such as one of the versions of the TR-069 protocols.

According to an optional implementation the collector COL collects different kinds of home network parameters for the different configured home network devices. This collection action can be executed, according to predefined rules and condition, in a continuous way and/or at predefined regular time moments. In this way, the collected network parameters are stored in the database of the Remote Management Center.

Different embodiments of the actual principle method can be developed based upon the differentiation between the type of network information that is used for the correlation step. Known home network parameters such as defined for the G.hn networks are for example : device identifications; domain topology identifications, neighbor device identifications, neighboring network identifications, data rate profiles, device presence indications, measured bit error rates, Cyclic Redundancy Checks CRC, retransmission counters, measured signal to noise ratio's SNR (average attenuation or frequency-dependent vector), channel gains (CG) and noise levels (average attenuation or frequency-dependent vector).

Although that the collection of the home network parameters can be performed in advance, the further execution of the following steps according to the present method can be initialized for instance by the user console CONS being associated to the respective home network HN. The user console CONS might receive signals from the home network which indicates irregularities in the home network upon which it transmits a request signal to the collector COL.

Upon reception of a request signal, and according to its predefined rules and conditions the collector forwards a trigger to the cross-correlator CC, optionally only after finishing some further collection of network parameters.

In particular, the data can be collected from the classes defined in TR-069 protocol specification.

An example of such a collected class is a collection of MAC addresses from the different devices. The collector is enabled to initiate the collection of different network parameters over the residential GW as shown in Figure 1. This is an example of the collection of binary data signals.

Referring to Figure 2, it illustrates an example of the collection of real-data signals. The upper part of Figure 2 illustrates the collection of the measured Signal to Noise Ratio SNR as a function of time for one of the devices. The measured bit rate drops which can be seen in Figure 2 are related to network impairments for that particular device i.e. for its network segment. The lower part of Figure 2 illustrates the collection of corresponding Bit Rate as a function of time.

Upon reception of the trigger signal, the cross-correlator CC performs a cross-correlation of the collected network parameters for the different network devices. This means that during the cross-correlation an "out of expected behavior" is searched for by means of a predefined algorithm.

Referring back to Figure 2, the home appliances produce the noise effects in different time instants, which are severely affecting the bit rates i.e. an "out of expected behavior" as shown in lower Figure 2. Thus, one can identify different transients between good and bad states (see the more vertical lines in the measurements), which in addition to the noise estimates can be used to identify the noise problems within the home network. The noise effects in the upper part of Figure 2 are indeed seen as vertical lines.

Two further examples of "out of expected behavior" will be described now her below.

Referring to back to Figure 1, it is illustrated that the impaired segment IS affects the network at a certain location before the coupling for the network devices A4 and A5 on the power line.

Figure 3 illustrates, corresponding to the impairment in Figure 1, a chronogram of the result of the collection of binary data signals for the different home network devices i.e. the result of the request of the remote server for collection of Device Identifications for maintenance and administration of the home network. When the remote server receives the network parameters which are implemented for this example by means of the Device Identification information, a predefined algorithm is activated to compare, the network status by evaluating different transient events of the Device Identifications of the different network devices. In such a way it is possible to identify the "an out of expected behavior". Figure 3 illustrates the impairment at the network segment which is common to both devices A4 and A5. On Figure 3 a present device is shown with a "P" and a not present device is shown with a "NP". The collected network parameters are compared to each other for the different devices. For network devices A4 and A5 "an out of expected behavior" is received at a certain moment in time. Indeed, for both devices the Device Identifications were not reported and the status changes from Present "P" to Not Present "NP". In this way, based upon the cross-correlation of the collected network parameters i.e. the cross-correlating of the Device Identifications for A1, A2, A3, A4 and A5, different transients are identified for A4 and A5. These differences Diff are identifying the impaired home network segment.

It has to be remarked that an identical out of order behavior can be identified for other binary data signals such as for a collection of a list of neighbor devices, a list of available neighboring networks, the respective data rate profiles, and an indication of presence of a device.

Figure 4 illustrates, corresponding to the impairment in Figure 1, a chronogram of the result of the collection of real-value data signals for the different home network devices i.e. the result of the request of the remote server for collection of Bit Error Rate BER. In this example the BER is used as a performance metric i.e. the collect network parameter. Figure 4 illustrates the impairment of the network segment which is common to devices A4 and A5. Indeed, a predefined segmentation algorithm, which compares the values of the nth (current) and (n+1)th (following) samples, is used to indicate the transition between the states based on the expected metric deviation. The expected metric deviation can be decided based on a statistical parameter such as sum of squared deviations, standard deviation, mean square error, mean absolute error, etc computed on the previous samples. Thus, it is possible to identify the impaired network segment by finding and determining the transient event between the nth and (n+1)th BER sample and by comparing the results for the different devices in time. Since the chronogram for devices A4 and A5 are showing an identical deviation in time, the impairment of the common network segment is hereby identified. So, based upon the cross-correlation of the network parameters i.e. the measured BER samples, the cross-correlator CC identifies a different event for the devices A4 and A5 compared to the others A1, A2 and A3, in the collected network parameters. The differences Diff are hereby identifying the impaired home network segment.

It has to be remarked that an identical out of order behavior can be identified for other real-value data signals such as for a collection of the Signal to Noise Ratio SNR for the respective devices, the Bit Error Rate BER or the channel gain and noise level for each respective device.

Furthermore, according to the method of the actual application the cross-corelator CC forwards the identified differences Diff to the generator GEN. Based upon the identified differences Diff the generator GEN generates a repair recommendation Rep.

Such a repair recommendation can be forwarded to the configurator CONF whereby the configurator CONF is enabled to reconfigure the home network. According to the above described example the configurator CONFIG might for instance forward to the home network a recommendation for the end-user to check its available home appliances upon a potential outside disturber i.e. for a potential cause of interference.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A home network troubleshooting method to detect impaired home network segments, wherein the home network (HN) has a plurality of home network devices (A1, A2, A3, A4, A5, ...) comprising a residential gateway (GW), said method comprises the steps of:
- collecting (COL) home network parameters for different network devices; and
- cross-correlating (CC) said network parameters for said different network devices; and
- based upon said cross-correlation, identifying (CC) anyone of different transients and different events (Diff) for different devices in said collected network parameters, said differences (Diff) hereby identifying such impaired home network segment; and
- generating (GEN) a repair recommendation (Rep) based upon said identified differences.

2. The trouble shooting method according to claim 1, wherein said network parameters are anyone of binary data signals or real-value data signals.

3. The trouble shooting method according to claim 1, wherein said network parameters are anyone of device identifications, domain topology identifications, neighbor device identifications, neighboring network identifications, data rate profiles, device presence indications, measured bit error rates, Cyclic Redundancy Checks, retransmission counters, measured signal to noise ratio's, channel gains, noise levels.

4. The trouble shooting method according to claim 1, with collecting said network parameters from defined classes of a predefined remote management protocol.

5. The trouble shooting method according to claim 1, wherein said method steps are executed by a trouble shooting device (TS-DEV) in a remote management center (MC) and whereby said home network parameters being collected via said residential gateway (RG) from said network devices (A1, A2, A3, A4, A5, ...).

6. A trouble shooting device (TS-DEV) for home network troubleshooting including detection of impaired home network segments in a home network (HN) with a plurality of network devices (A1, A2, A3, A4, A5, ...) comprising a residential gateway (GW), wherein said trouble shooting device (TS-DEV) comprises :
- a collector (COL) arranged to collect home network parameters for different network devices; and
- a cross-correlator (CC) coupled to said collector and arranged
to cross-correlate said network parameters for said different network devices; and
to identify anyone of different transients and different events (Diff) for different devices in said collected network parameters, said differences (Diff) hereby identifying such impaired home network segment; and
- a generator (GEN) arranged to generate a repair recommendation (Rep) based upon said identified differences.

7. The trouble shooting device (TS-DEV) of claim 6, whereby said trouble shooting device is located in a remote management center (MC) that is remote from said home network (HN).
